# EUROPÄISCHE PATENTANMELDUNG

(11) **EP 1 736 242 A2**
(43) Veröffentlichungstag der Anmeldung: **27.12.2006**
(21) Anmeldenummer: 06115268.2
(22) Anmeldetag: 12.06.2006
(51) Int. Cl.: B01J 47/06

(54) **Ionentauscherbehälter, insbesondere in einem Kraftfahrzeug**

(30) Priorität: 14.06.2005 DE 202005009399 U
(71) Anmelder: MANN+HUMMEL GmbH, 71638 Ludwigsburg (DE)
(72) Erfinder: Amesöder, Dieter, 74321 Bietigheim-Bissingen (DE); Schreckenberger, Dieter, 71672 Marbach (DE)

(57) **Zusammenfassung**

Ein lonentauscherbehälter weist ein Gehäuse zur Aufnahme eines lonentauschermittels und eine Zuflussleitung sowie eine Abflussleitung im Gehäuse zur Ein- und Ausleitung einer durch das lonentauschermittel zu leitenden Flüssigkeit auf. Zur Beheizung der Flüssigkeit ist ein Heizmittel durch den lonentauscherbehälter geführt, wobei das Heizmittel von der durch das lonentauschermittel zu leitenden Flüssigkeit separiert ist.

## Beschreibung

Die Erfindung bezieht sich auf einen lonentauscherbehälter, insbesondere in einem Kraftfahrzeug, nach dem Oberbegriff des Anspruches 1.

Derartige lonentauscherbehälter werden beispielsweise im Abgasstrang von Kraftfahrzeugen mit einer Brennkraftmaschine eingesetzt, um dem Wasseranteil in einer wässrigen Harnstofflösung Kalziumionen zu entziehen, wodurch einer Verkalkung von Einspritzdüsen vorgebeugt wird, über die die wässrige Harnstofflösung in den Abgasstrom zur Sauerstoffreduktion von Stickoxiden eingespritzt wird. Der Ionentauscher bewirkt eine Entkalkung des Wasseranteils in der Harnstofflösung, wodurch die Lebensdauer der mit der Harnstofflösung in Kontakt gelangenden Bauteile erhöht wird.

Problematisch hierbei ist, dass aufgrund des verhältnismäßig hohen Wasseranteils in der Harnstofflösung - der Wasseranteil beträgt etwa 2/3 - der Gefrierpunkt der Lösung höher liegt als bei strengem Frost auftretende Temperaturen, so dass die Gefahr besteht, dass die wässrige Harnstofflösung gefriert.

Der Erfindung liegt das Problem zugrunde, einen lonentauscherbehälter insbesondere in einem Kraftfahrzeug zu schaffen, bei dem mit einfachen Maßnahmen eine Beschädigung von Bauteilen bei tiefen Temperaturen verhindert wird. Dies soll insbesondere ohne zusätzlichen Energieaufwand erfolgen.

Dieses Problem wird erfindungsgemäß mit den Merkmalen des Anspruches 1 gelöst. Die Unteransprüche geben zweckmäßige Weiterbildungen an.

Zur Beheizung der Flüssigkeit, welche durch den lonentauscherbehälter zum lonenaustausch geleitet wird, ist ein Heizmittelkreislauf am Gehäuse vorgesehen, wobei das Heizmittel im Heizmittelkreislauf separat von der Flüssigkeit geführt ist, die durch den lonentauscherbehälter geleitet wird.

Bei einem derartigen lonentauscherbehälter ist sichergestellt, dass die Temperatur der durch den lonentauscherbehälter zu leitenden Flüssigkeit immer im Bereich der Betriebstemperatur gehalten wird, so dass auch bei tiefen Außentemperaturen ein Gefrieren der Flüssigkeit verhindert wird. Über den Heizmittelkreislauf wird im laufenden Betrieb Wärme auf die Flüssigkeit übertragen, wodurch diese ihre Betriebstemperatur aufrecht erhalten kann.

Im Falle einer Anwendung in einem Kraftfahrzeug kann als Heizmittel die Kühlflüssigkeit der Brennkraftmaschine des Kraftfahrzeugs eingesetzt werden. Die Kühlflüssigkeit wird zur Kühlung der Brennkraftmaschine verwendet, wobei nach dem Durchströmen des Zylindergehäuses der Brennkraftmaschine das erwärmte Kühlmittel zweckmäßig in den lonentauscherbehälter zur Erwärmung der durch das lonentauschermittel zu leitenden Flüssigkeit geleitet wird. Bei Verwendung der Kühlflüssigkeit als Heizmittel für den lonentauscherbehälter ist kein zusätzlicher Energieaufwand, beispielsweise durch Einsatz einer externen Heizquelle, erforderlich.

Zweckmäßig sind bei dem lonentauscherbehälter mindestens zwei Gehäuse vorgesehen, von denen das äußere Gehäuse ein Innengehäuse umschließt, welches das lonentauschermittel enthält. Durch das Innengehäuse mit dem darin befindlichen lonentauschermittel wird die Flüssigkeit geleitet, wobei das Heizmittel zwischen dem Innengehäuse und dem Außengehäuse geführt ist. Das Heizmittel wird insbesondere durch eine wendelförmigen Heizleitung geleitet, welche auf der Außenseite des Innengehäuses, also zwischen Innen- und Außengehäuse geführt wird. Diese Ausführung bietet den Vorteil, dass auch bei einem Bruch eines Bauteils die beiden Flüssigkeiten nicht miteinander vermengt werden. Vielmehr bleiben auch bei schadhaften Bauteilen die Flüssigkeit, welche durch das lonentauschermittel strömt, und das Heizmittel getrennt.

In vorteilhafter Ausführung ist ein weiteres Gehäuse vorgesehen, welches als Zwischengehäuse zwischen dem Innengehäuse und dem Außengehäuse angeordnet ist. Auf diese Weise erhält man zwei voneinander separierte Zwischenräume, nämlich zum einen zwischen dem Innen- und dem Zwischengehäuse und zum anderen zwischen dem Zwischen- und dem Außengehäuse. Über den inneren Zwischenraum wird zweckmäßig die Flüssigkeit in den lonentauscherbehälter eingeleitet, im äußeren Zwischenraum ist dagegen das Heizmittel geführt. Beide Flüssigkeiten verlaufen über eine große Fläche parallel, was die Wärmeübertragung vom Heizmittel in Richtung der durch das lonentauschermittel zu leitenden Flüssigkeit begünstigt.

In einer weiteren zweckmäßigen Ausgestaltung ist vorgesehen, dass im Gehäuse ein an den Strömungsweg der Flüssigkeit angrenzendes, verformbares Ausdehnungselement angeordnet ist. Dieses Ausdehnungselement ist insbesondere elastisch verformbar und ermöglicht im Falle eines Gefrierens der Flüssigkeit eine Kompensation des größeren Volumens des Wasseranteils in der Flüssigkeit. Das Ausdehnungselement gibt unter dem Druck der gefrierenden und sich ausdehnenden Flüssigkeit nach, wodurch das zur Verfügung stehende Volumen im Strömungsweg der Flüssigkeit vergrößert wird. Die beim Gefrierprozess auftretenden hohen Kräfte können aufgrund der Verformung des Ausdehnungselementes nicht zu einer Zerstörung des lonentauscherbehälters bzw. von Teilen des lonentauscherbehälters führen.

Das verformbare Ausdehnungselement ist insbesondere als ein den Strömungsweg der Flüssigkeit radial begrenzendes Ringelement ausgebildet. Beim Gefrieren der Flüssigkeit gibt das Ringelement radial nach außen nach. Möglich sind aber auch andere Ausgestaltungen des Ausdehnungselementes, beispielsweise in Form von zwei kreuzförmig angeordneten Wänden, die axial im Strömungsweg der Flüssigkeit angeordnet sind, wobei bei tiefen Temperaturen die Wanddicken von der gefrierenden Flüssigkeit zusammengepresst werden.

Das lonentauschermittel ist vorteilhaft im Gehäuse axial von einer verschiebbaren Begrenzungsscheibe begrenzt. Auch diese verschiebbare Begrenzungsscheibe ermöglicht eine Volumenkompensation beim Gefrieren der durchzuleitenden Flüssigkeit.

Weitere Vorteile und zweckmäßige Ausführungen sind den weiteren Ansprüchen, der Figurenbeschreibung und den Zeichnungen zu entnehmen. Es zeigen:

Fig. 1 einen Schnitt durch einen lonentauscherbehälter, welcher drei übereinander gestülpte Gehäuse umfasst, wobei im Innengehäuse ein lonentauschermittel angeordnet ist, durch das eine Flüssigkeit hindurchgeleitet wird, der Kalziumionen oder weitere Ionen entzogen werden sollen, und wobei ein äußerer Heizmittelkreislauf zur Erwärmung der Flüssigkeit vorgesehen ist,

Fig. 2 einen Ausschnitt aus dem Randbereich des lonentauscherbehälters in vergrößerter Darstellung,

Fig. 3 einen Schnitt durch einen lonentauscherbehälter in einer modifizierten Ausführung,

Fig. 4 einen Schnitt durch einen weiteren lonentauscherbehälter,

Fig. 5 eine perspektivische Ansicht in Explosionsdarstellung vom Innengehäuse eines lonentauscherbehälters mit darin angeordnetem, kreuzförmigem Ausdehnungselement.

In den Figuren sind gleiche Bauteile mit gleichen Bezugszeichen versehen.

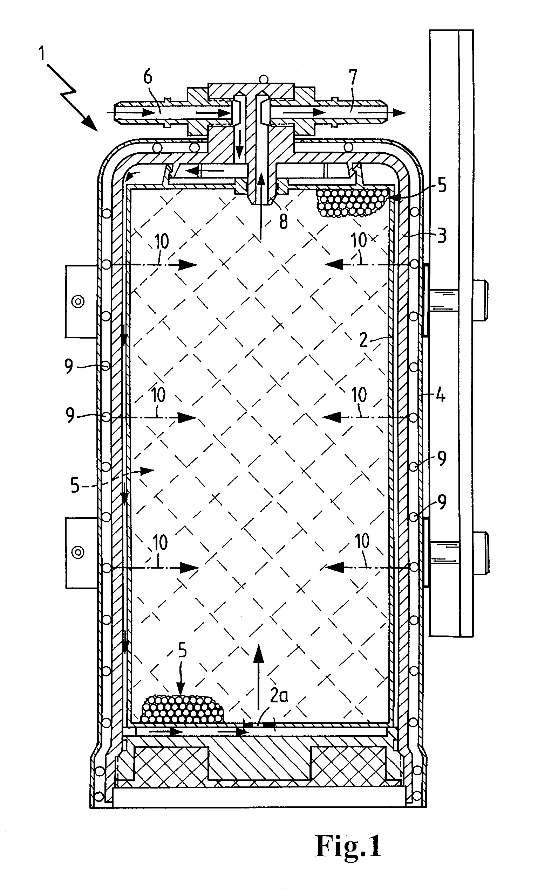

Der in Fig. 1 dargestellte lonentauscherbehälter 1 dient zur Anwendung in einem Kraftfahrzeug. Hierbei wird eine wässrige Harnstofflösung, welche zur Sauerstoffreduktion von Stickoxiden in den Abgasstrom eingespritzt wird, zunächst durch den lonentauscherbehälter geleitet, um den Wasseranteil in der wässrigen Harnstofflösung einer Entkalkung zu unterziehen. In dem lonentauscher werden Kalziumionen, welche im Wasseranteil enthalten sind, gegen Natriumionen ausgetauscht. Auf diese Weise wird das Wasser entkalkt, wodurch einer Verkalkung der mit der wässrigen Harnstofflösung in Berührung gelangenden Bauteile vorgebeugt wird.

Der lonentauscherbehälter 1 umfasst drei ineinanderliegende Gehäuse 2, 3 und 4, wobei das Innengehäuse 2 das lonentauschermittel 5 aufnimmt, das von der wässrigen Harnstofflösung zu durchströmen ist. Die wässrige Harnstofflösung wird über eine Zuflussleitung 6 dem lonentauscherbehälter 1 zugeführt und nach dem Durchströmen des lonentauschermittels 5 im Innengehäuse 2 über eine Abflussleitung 7 wieder abgeleitet. Die Zuflussleitung 6 und die Abflussleitung 7 befinden sich im Deckelbereich des lonentauscherbehälters 1. Nach dem Einleiten über die Zuflussleitung 6 wird die Harnstofflösung in einen zylinderförmigen Zwischenraum geleitet, welcher zwischen dem Innengehäuse 2 und dem Zwischengehäuse 3 gebildet ist. In diesem Zwischenraum strömt die Harnstofflösung nach unten in den Bodenbereich des lonentauscherbehälters, wo die Harnstofflösung über eine im Boden des Innengehäuses 2 befindliche Öffnung 2a in den Innenraum des Innengehäuses 2 einströmt. Die Harnstofflösung durchströmt den Innenraum sowie das dort befindliche lonentauschermittel 5 von unten nach oben und wird über einen zentralen Abströmstutzen 8 im Deckelbereich des Innengehäuses 2 in die Abflussleitung 7 abgeleitet.

Zur Beheizung der wässrigen Harnstofflösung wird ein Heizmittel durch den lonentauscherbehälter 1 geführt. Hierfür ist eine Heizleitung 9 zur Aufnahme des Heizmittels wendelförmig in den Zwischenraum zwischen dem Außengehäuse 4 und dem Zwischengehäuse 3 gelegt. Das Heizmittel durchströmt die wendelförmige Heizleitung 9, wobei die Wärme des Heizmittels radial in Pfeilrichtung 10 nach innen übertragen wird und hierbei die wässrige Harnstofflösung erwärmt, die separat von der Heizleitung 9 im Zwischenraum zwischen dem Innengehäuse 2 und dem Zwischengehäuse 3 nach unten strömt. Die Heizleitung 9 erstreckt sich wendelförmig über die axiale Länge des lonentauscherbehälters und sorgt über die axiale Länge für eine gleichmäßige Wärmeübertragung auf die Harnstofflösung. Hierdurch wird die Temperatur der Harnstofflösung auf einem Niveau gehalten, das auch bei niedrigen Außentemperaturen ein Gefrieren des Wasseranteils in der Harnstofflösung verhindert.

Das Heizmittel und die wässrige Harnstofflösung werden voneinander separiert durch den lonentauscherbehälter 1 geführt. Da das Heizmittel in der Heizleitung 9 geführt ist und außerdem das Zwischengehäuse 3 zwischen der Heizleitung 9 und der wässrigen Harnstofflösung liegt, besteht eine doppelte Sicherheit gegen ein unerwünschtes Vermengen beider Flüssigkeiten im Falle des Bruchs eines Bauteiles.

Als Heizmittel wird insbesondere die Kühlflüssigkeit verwendet, welche für die Kühlung der Brennkraftmaschine des Kraftfahrzeuges dient.

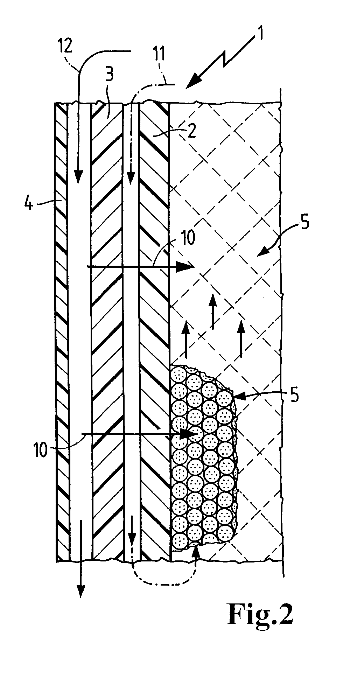

In Fig. 2 ist ein lonentauscherbehälter 1 in einer modifizierten Ausführung ausschnittweise dargestellt. Wie beim vorangegangenen Ausführungsbeispiel umfasst der lonentauscherbehälter 1 drei Gehäuse 2, 3 und 4, zwischen denen jeweils ein Zwischenraum gebildet ist. Die wässrige Harnstofflösung kann in Pfeilrichtung 11 durch den inneren Zwischenraum zwischen dem Innengehäuse 2 und dem Zwischengehäuse 3 nach unten strömen. Das Heizmittel wird in Pfeilrichtung 12 durch den äußeren Zwischenraum zwischen dem Außengehäuse 4 und dem Zwischengehäuse 3 nach unten geleitet. Im Unterschied zum ersten Ausführungsbeispiel ist das Heizmittel nicht in einer Heizleitung geführt, sondern strömt direkt in den Zwischenraum zwischen Gehäuse 3 und 4 nach unten. Die Wärmeübertragung erfolgt in Pfeilrichtung 10 radial nach innen, wodurch die Harnstofflösung im Zwischenraum zwischen den Gehäusen 2 und 3 sowie im Innenraum des Innengehäuses 2 erwärmt wird.

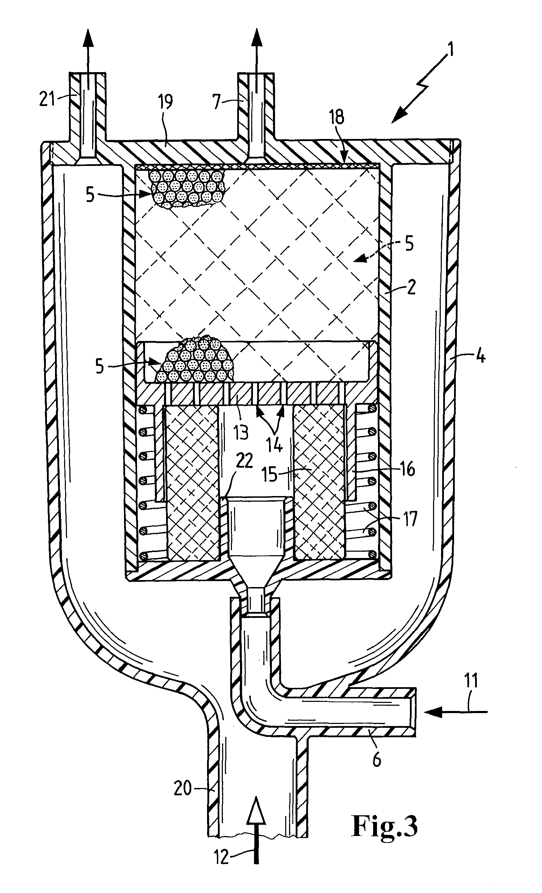

In Fig. 3 ist ein weiteres Ausführungsbeispiel für einen lonentauscherbehälter 1 gezeigt. Der Behälter umfasst in dieser Ausführung nur zwei Gehäuse, nämlich ein Innengehäuse 2 und ein Außengehäuse 4. Im Innengehäuse 2 ist das lonentauschermittel 5 aufgenommen, welches axial nach unten von einer im Innengehäuse 2 verschieblich gehaltenen Begrenzungsscheibe 13 gehalten ist, in die Strömungsöffnungen 14 für den Durchfluss der wässrigen Harnstofflösung eingebracht sind. Die Einleitung der wässrigen Harnstofflösung erfolgt im unteren Bereich des lonentauscherbehälters über die Zuflussleitung 6 und den Boden des Innengehäuses 2. Im weiteren Strömungsverlauf fließt die wässrige Harnstofflösung durch die Strömungsöffnungen 14 in der Begrenzungsscheibe 13 und gelangt anschließend in Kontakt mit dem lonentauschermittel 5. Im Deckelbereich ist der Innenraum mit dem lonentauschermittel 5 von der Abflussleitung 7 über eine Vliesscheibe 18 separiert, die jedoch für die wässrige Harnstofflösung durchlässig ist. Das Innengehäuse 2 bildet mit einer Deckelscheibe 19, in die die Abflussleitung 7 als Stutzen eingebracht ist, ein einteiliges Kunststoffbauteil; gegebenenfalls kommt auch eine zweiteilige Ausführung in Betracht.

Das Heizmittel wird ebenfalls über den Boden dem lonentauscherbehälter 1 zugeführt. Hierfür ist im Boden des Außengehäuses 4 ein Stutzen 20 ausgebildet, über den das Heizmittel in den Zwischenraum zwischen Innengehäuse 2 und Außengehäuse 4 geleitet wird. Über einen Abströmstutzen 21, der einteilig mit der Deckelscheibe 19 und damit auch einteilig mit dem Innengehäuse 2 ausgebildet ist, kann das Heizmittel aus dem lonentauscherbehälter abgeleitet werden. Der Stutzen 20, über den das Heizmittel eingeführt wird, bildet mit dem Außengehäuse 4 ein einteiliges Kunststoff-Bauteil, ebenso die Zuflussleitung 6 für die Zufuhr der wässrigen Harnstofflösung.

Im Innenraum des Innengehäuses 2 befindet sich ein Ausdehnungselement 15, welches als Ringelement ausgeführt ist und unmittelbar an die Öffnung im Boden des Innengehäuses 2 angrenzt, über die die wässrige Harnstofflösung dem Innengehäuse 2 zugeführt wird. Das Ausdehnungselement 15 ist elastisch verformbar ausgebildet, es besteht insbesondere aus einem Elastomer wie EPDM. Radial nach außen ist das Ausdehnungselement 15 von einer ringförmigen Wandung 16 abgestützt, die einteilig mit der Begrenzungsscheibe 13 ausgebildet ist und sich von dieser axial nach unten erstreckt. Radial nach innen wird das Ausdehnungselement von einem Stutzen 22 fixiert, der die Einströmöffnung im Boden einschließt und einteilig mit dem Innengehäuse 2 ausgebildet ist.

Im Zwischenraum zwischen der Außenseite des Ausdehnungselementes 15 und der Innenwandung des Innengehäuses 2 ist ein spiralförmiges Federelement 17 eingebracht, welches die axial verschiebliche Begrenzungsscheibe 13 federnd am Boden des Innengehäuses 2 abstützt.

Das verformbare Ausdehnungselement 15 kann Volumenänderungen kompensieren. Falls die wässrige Harnstofflösung bei tiefen Außentemperaturen gefriert, wird die Wandung des Ausdehnungselementes 15 zusammengedrückt, wodurch die aufgrund des Gefrierprozesses auftretende Volumenvergrößerung ausgeglichen wird. Auf diese Weise werden Beschädigungen der festen Bauteile im lonentauscherbehälter 1 verhindert.

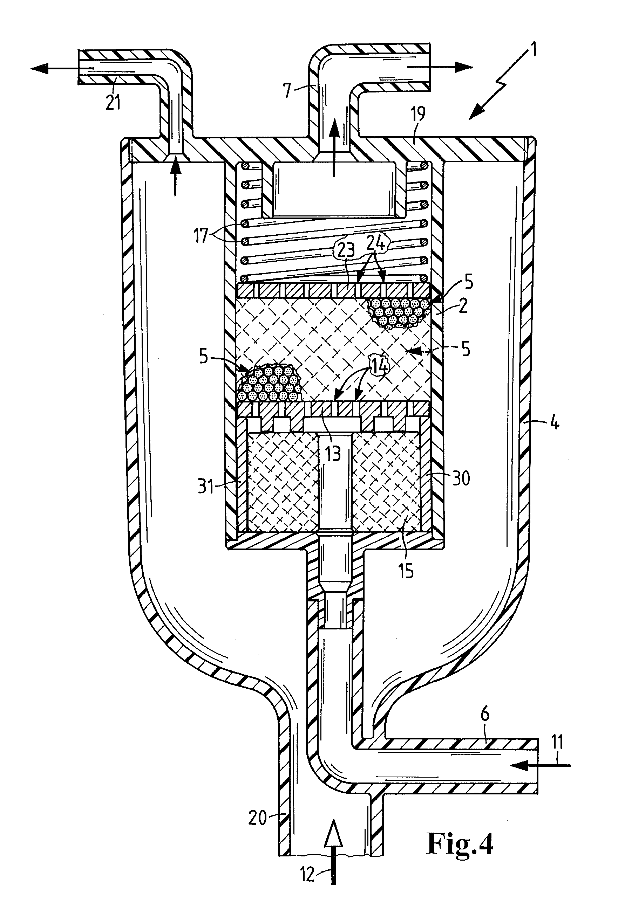

Das in Fig. 4 gezeigte Ausführungsbeispiel entspricht im Wesentlichen demjenigen aus Fig. 3, jedoch mit Unterschieden im Innenraum des Innengehäuses 2. Das lonentauschermittel 5 ist axial von jeweils einer Begrenzungsscheibe 13 und 23 begrenzt, die Begrenzungsscheibe 23 ist axial im Innenraum des Innengehäuses 2 verschieblich. Die Begrenzungsscheibe 13 wird durch einen axialen Anschlag im Innengehäuse 2 nach unten begrenzt. Dieser Anschlag wird durch Stege 30, 31 gebildet. Alternativ könnte auch der Durchmesser des Innengehäuses 2 als Anschlag dienen, wenn der Durchmesser entsprechend reduziert wird.

Im unteren Bereich ist ein Ausdehnungselement 15 in den Innenraum des Innengehäuses 2 eingebracht, welches ringförmig ausgebildet ist und wie im vorgenannten Ausführungsbeispiel aus einem elastisch verformbaren Material, insbesondere aus einem Elastomer wie EPDM besteht. Auf dem Ausdehnungselement 15 liegt die untere Begrenzungsscheibe 13 auf, in die die Strömungsöffnungen 14 für die wässrige Harnstofflösung eingebracht sind. Der Raum zur Aufnahme des lonentauschermittels 5 wird nach oben von der zweiten Begrenzungsscheibe 23 begrenzt, in die ebenfalls Strömungsöffnungen 24 für den Austritt der wässrigen Harnstofflösung eingebracht sind. Die obere Begrenzungsscheibe 23 wird von einem spiralförmigen Federelement 17 nach unten gedrückt.

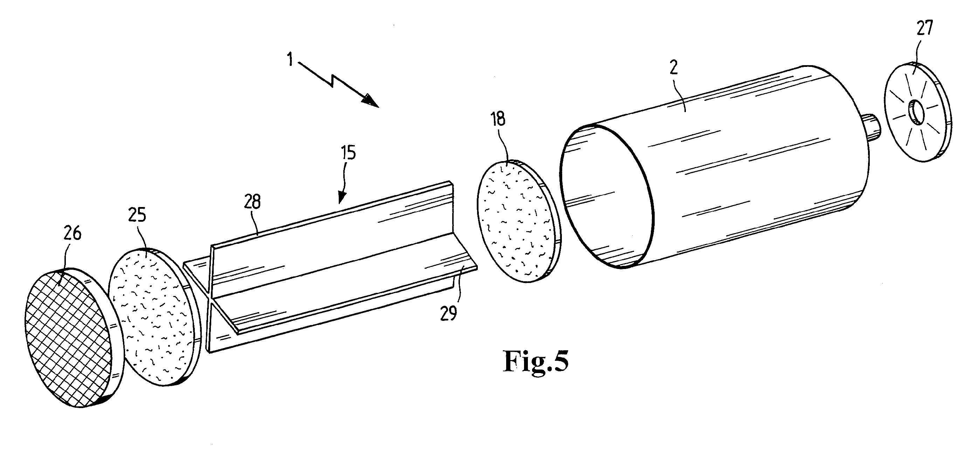

Im Ausführungsbeispiel nach Fig. 5 ist lediglich das Innengehäuse 2 eines lonentauscherbehälters 1 ohne Heizkreislauf dargestellt. In das zylindrische Innengehäuse 2 wird eine oben liegende Vliesscheibe 18 eingesetzt, auf die ein Ausdehnungselement 15 mit zwei kreuzförmig angeordneten Wänden 28 und 29 folgt. Die Wände 28 und 29 des Ausdehnungselementes 15 bestehen aus einem elastisch verformbaren Material. In die vier von den Wänden 28 und 29 separierten Kammern ist das lonentauschermittel aufgenommen. Im Falle des Gefrierens der in den Innenraum des Gehäuses 2 eingeleiteten wässrigen Harnstofflösung werden die Wände 28 und 29, die aus elastischem Material bestehen, zusammengedrückt, wodurch eine Kompensation des vergrößerten Volumens erreicht wird, das die gefrorene Harnstofflösung einnimmt.

Im Bereich des Bodens wird eine weitere Vliesscheibe 25 eingesetzt, so dass insgesamt zwei Vliesscheiben 18 und 25 das Ausdehnungselement 15 axial an beiden Stirnseiten begrenzen. Den Abschluss bildet ein Siebboden 26. Im oben liegenden Deckelbereich wird auf das Innengehäuse 2 eine Elastomerscheibe 27 aufgesetzt, welche im zusammengebauten Zustand des lonentauscherbehälters 1 zwischen Innengehäuse und dem Außengehäuse angeordnet ist.

## Patentansprüche

1. lonentauscherbehälter, insbesondere in einem Kraftfahrzeug, mit einem Gehäuse zur Aufnahme eines lonentauschermittels (5) und einer Zuflussleitung (6) und einer Abflussleitung (7) im Gehäuse zur Ein- und Ausleitung einer durch das lonentauschermittel (5) zu leitenden Flüssigkeit, **dadurch gekennzeichnet, dass** zur Beheizung der Flüssigkeit ein Heizmittel durch den lonentauscherbehälter (1) geführt ist, wobei das Heizmittel von der durch das lonentauschermittel (5) zu leitenden Flüssigkeit separiert ist.

2. lonentauscherbehälter nach Anspruch 1, **dadurch gekennzeichnet, dass** das Gehäuse mit dem lonentauschermittel (5) ein Innengehäuse (2) ist, das von mindestens einem weiteren Gehäuse umschlossen ist.

3. lonentauscherbehälter nach Anspruch 2, **dadurch gekennzeichnet, dass** ein das Innengehäuse (2) einschließendes Außengehäuse (4) vorgesehen ist, wobei das Heizmittel zwischen Innengehäuse (2) und Außengehäuse (4) geführt ist.

4. lonentauscherbehälter nach Anspruch 3, **dadurch gekennzeichnet, dass** zwischen Innen- und Außengehäuse (2, 4) ein Zwischengehäuse (3) eingebracht ist, wobei zwischen Innen- und Zwischengehäuse (2, 3) die Flüssigkeit und zwischen Zwischen- und Außengehäuse (3, 4) das Heizmittel geführt ist.

5. lonentauscherbehälter nach einem der Ansprüche 1 bis 4, **dadurch gekennzeichnet, dass** das Heizmittel in einer wendelförmigen Heizleitung (9) auf der Außenseite des das lonentauschermittel (5) aufnehmendes Gehäuses geführt ist.

6. lonentauscherbehälter nach einem der Ansprüche 1 bis 5, **dadurch gekennzeichnet, dass** im Gehäuse ein an den Strömungsweg der Flüssigkeit angrenzendes, verformbares Ausdehnungselement (15) angeordnet ist.

7. lonentauscherbehälter nach Anspruch 6, **dadurch gekennzeichnet, dass** das verformbare Ausdehnungselement (15) als ein den Strömungsweg radial begrenzendes Ringelement ausgebildet ist.

8. lonentauscherbehälter nach Anspruch 6 oder 7, **dadurch gekennzeichnet, dass** das verformbare Ausdehnungselement (15) aus einem Elastomer gefertigt ist.

9. lonentauscherbehälter nach einem der Ansprüche 1 bis 8, **dadurch gekennzeichnet, dass** das lonentauschermittel (5) axial im Gehäuse von einer verschiebbaren Begrenzungsscheibe (13) begrenzt ist.

10. lonentauscherbehälter nach Anspruch 9, **dadurch gekennzeichnet, dass** in die Begrenzungsscheibe -Strömungsöffnungen für die Flüssigkeit eingebracht sind.

11. lonentauscherbehälter in einem Kraftfahrzeug nach einem der Ansprüche 1 bis 10, **dadurch gekennzeichnet, dass** das Heizmittel die Kühlflüssigkeit für die Brennkraftmaschine des Kraftfahrzeugs ist.
